Europäisches Patentamt

European Patent Office

Office européen des brevets

(19)

(11) Publication number: 0 313 503 B1

## EUROPEAN PATENT SPECIFICATION

(12)

(45) Date of publication of patent specification: 15.06.94 (51) Int. Cl.⁵: G05D 7/01

(21) Application number: 88630178.7

(22) Date of filing: 12.10.88

(54) Metering valve temperature compensation.

(30) Priority: 22.10.87 US 111398

(43) Date of publication of application:
26.04.89 Bulletin 89/17

(45) Publication of the grant of the patent:
15.06.94 Bulletin 94/24

(84) Designated Contracting States:
DE FR GB IT SE

(56) References cited:
EP-A- 0 106 781
EP-A- 0 153 153
GB-A- 908 503
US-A- 4 146 051
US-A- 4 226 365

(73) Proprietor: UNITED TECHNOLOGIES CORPO-
RATION
United Technologies Building
1, Financial Plaza
Hartford, CT 06101(US)

(72) Inventor: Perkinson, Robert Howard
471 Springfield Road
Somers Connecticut 06071(US)
Inventor: Stearns, Charles Frederick
60 Fernwood Drive
East Longmeadow Massachusetts 01028(US)
Inventor: Belanger, Rene Francis
172 Ontario Avenue
Holyoke Massachusetts 01040(US)

(74) Representative: Weydert, Robert et al
Dennemeyer & Associates Sàrl
P.O. Box 1502
L-1015 Luxembourg (LU)

## Description

### Technical Field

This invention relates to fuel controls and more particularly to fuel controls which compensate for changes in fuel temperature.

### Background Art

Fuel controls meter fuel to the combustion chamber of a gas turbine engine. Ideally the weight flow of the metered fuel is constant for any given operating condition where speed and inlet air density are constant. However, the temperature of the fuel that is delivered to the fuel control may vary typically in the range from -54° - 110° C (-65° to 230° F). Such a fuel temperature range results in a density change of the fuel of approximately 7 % over the range. Because most fuel control metering valves are constant volumetric flow rate devices, if the density change is not compensated for, an error in weight flow results. Prior art devices typically adjust the pressure drop across the fuel control metering valve as a function of temperature to keep the fuel weight flow constant. A device of this type is disclosed in EP-A-0-106-781 which concerns a flow controller having metering means and pressure drop control means. A metering valve element of the known controller has a metering window controlling fluid flow in cooperation with a housing passage. In the metering element is disposed a pressure drop control spool cooperating with a pressure drop control window in the metering element. The pressure drop control is movable responsive to the pressure upstream and downstream of the metering window and responsive to a temperature probe changing in length when the temperature of the fluid stream changes.

Some high speed military aircraft engines have augmentors (afterburners) in which the exhaust from the gas turbine engine is heated to a higher temperature by adding fuel to the turbine exhaust gas to produce higher jet exhaust velocity and consequently higher thrust. Augmentors are generally used for short periods of time, and may remain off for long periods. The augmentor fuel control, and the fuel therein, may become very hot during off periods. However, when the augmentor is actuated, very cold fuel may be delivered to the augmentor fuel control from the fuel tanks. A rapid temperature change provides a rapid density change which causes a rather large fuel weight flow error. Conventional methods for providing compensation for the change are generally slow. Augmentors generally will have been turned off by the time the compensation has had any effect.

### Disclosure of Invention

The object of the invention is to provide quick compensation for changes in the density of fuel passing through a fuel control to accurately control the weight flow of fuel passing therefrom.

According to the invention, to achieve this, there is provided an apparatus for metering a constant weight flow of fluid while compensating for temperature changes of said fluid comprising a valve for metering said constant weight flow, said valve having a metering window means provided with a logarithmic shape and a spool movable by actuation means along an axis for controlling the open cross-sectional flow area of said metering window means to meter a constant weight flow therethrough, a temperature probe for sensing a change in temperature, said temperature probe being disposed within the spool in the fluid flow stream therethrough, and said temperature probe changing a given percentage in length in the direction of said axis as the temperature of the fluid changes, and means for sensing said length change and controlling said spool actuation means to move said spool along said axis such that as said temperature probe changes a given percentage in length a corresponding percentage of the open cross sectional flow area of said metering window means is changed so that a constant weight flow is maintained.

Compensation is achieved directly without involving the fuel control digital electronic control.

In one embodiment of the invention, the temperature probe is comprised of a first metallic element and a coaxial second metallic element disposed about the first metallic element, the second element having a plurality of apertures so that a fluid being monitored may be readily sensed by the first and second elements. By having the temperature probe situated in the interior of the metering valve it is exposed to flowing fuel as it enters the fuel control. In this position, it is closely coupled to the actual temperature of the fuel as it metered to the augmentor.

The logarithmic shape of the metering window allows a percentage change in weight flow corresponding to a percentage change in length of the temperature probe.

These and other features and advantages of the present invention will become more apparent in light of the following detailed description of a best mode embodiment thereof, as illustrated in the accompanying drawing.

### Brief Description of Drawings

Fig. 1 is a schematic view, partially cut away, of a fuel control incorporating an embodiment of an apparatus for adjusting the metered flow as a function of temperature;

Fig. 2 is a developed view of the metering sleeve spool of Fig. 1;

Fig. 3 is a cut away view of the shell of Fig. 1; and

Fig. 4 is an enlarged view of a window of the sleeve of Fig. 2.

Best Mode for Carrying Out the Invention

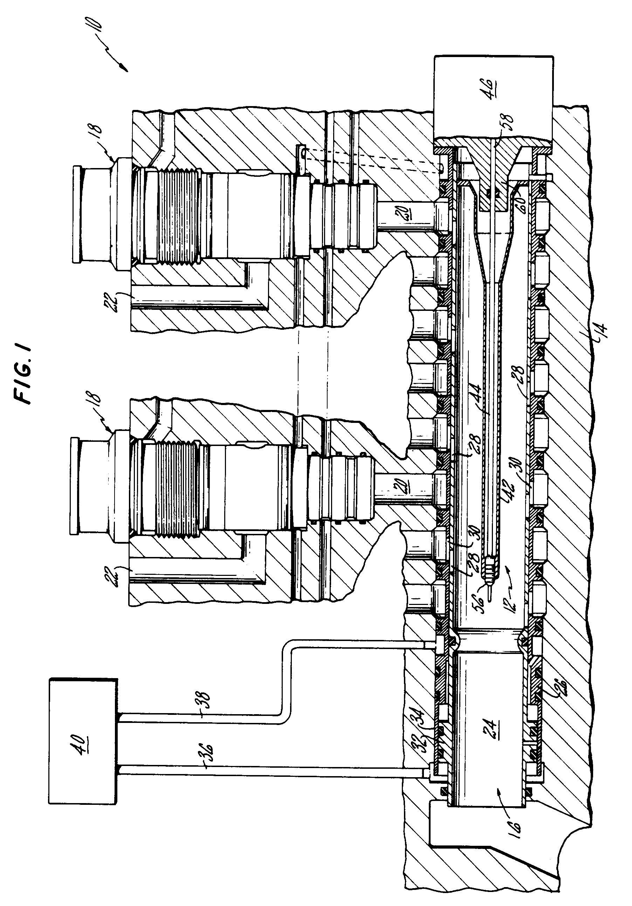

Referring to Fig. 1 a portion of the fuel control 10 incorporating an embodiment of the temperature compensation probe 12 of the invention is shown. The fuel control is designed generally to control the amount and sequence of fuel provided to the afterburning segments (not shown) of a turbofan or turbojet engine (not shown). The fuel control generally includes a housing 14, a metering valve 16, the temperature probe 12 and a plurality of shut-off and pressure regulating valves 18 (SRV).

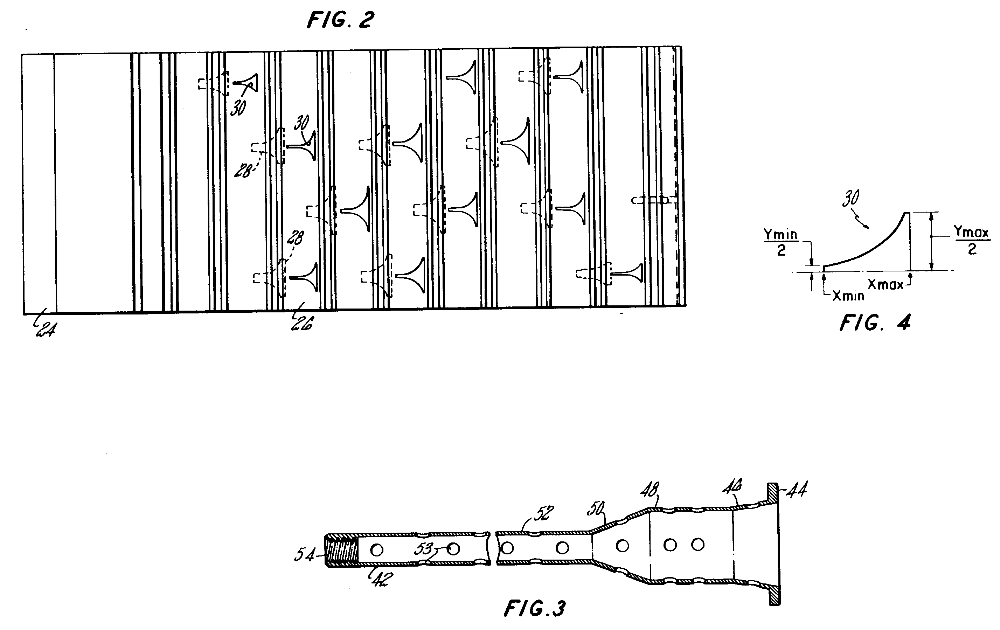

The metering valve 16 regulates the amount of fuel flowing to the afterburner segments through the shut-off and pressure regulating valves 18 via line 20 and line 22. Each SRV opens the flow to each segment as required and regulates the pressure drop across the metering valve. (The SRVs do not comprise a portion of the invention disclosed herein). The metering valve has a roughly cylindrical spool 24 that is close fitted for reciprocal movement within a cylindrical sleeve 26 within the housing 14. The spool has a plurality of apertures 28 (shown as dotted lines in Fig. 2) which mimic the shape of specially shaped windows 30 (as will be discussed infra) in the sleeve. Each window in the sleeve communicates with an SRV 18 via line 20.

A cylindrical flange 32 extends outwardly from a left-hand portion of the spool 24 within an enlarged 34 portion of the sleeve 26. Hydraulic fluid is brought to bear upon the flange via line 36 or line 38. A digital electronic fuel control (DEC not shown) controls an electrohydraulic valve (EHV) 40 which regulates the pressure of a fluid admitted to line 36 or line 38 thereby subjecting the flange 32, and therefore the spool, to pressure unbalances which cause the spool to move laterally. Lateral movement of the spool effects the cross-sectional area openings between the window and the apertures, metering the flow to each afterburner segment thereby.

The temperature compensation probe 12 is disposed coaxially within the spool 24. The probe is comprised of an exterior shell 42, a rod 44, and a feedback means 46. The shell and the rod are comprised of separate metals (AMS 5630 steel and a nickel alloy, such as INVAR™ both supplied by General Aerospace of Plainview, New York, respectively) to form a temperature sensitive, bimetallic element. The workings of bimetallic elements are well known in the art. The shell (see Fig. 3) is hollow, thin walled, and perforated and has five coaxial portions. The shell has a large diameter first portion 44 which is attached to the spool 24 by conventional means, a conical second portion 46 which tapers inwardly towards the left, a cylindrical third portion 48 which extends to the left from the second portion, a conical fourth portion 50 which tapers inwardly toward the left from the third portion and a cylindrical fifth portion 52 which extends from the fourth portion to the left. A threaded section 54 is disposed within the left-hand side of the fifth portion. The shell has a plurality of perforations to allow the fluid to bath the interior of the shell and the rod. As fuel passes from left to right in the spool, the pressure therein tends to drop from left to right as the fuel passes to each segment. The shape of the temperature probe, which basically increases in thickness towards the right, tends to maintain the pressure of the fuel within the length of the spool constant.

The rod 44 has a threaded first end portion 56 for mating with the threaded section 54 of the fifth portion 52 of the shell 42. A second end portion 58 of the rod attaches to the feedback means 46 which may comprise resolver or a linear variable transducer. The rod is mounted for reciprocal motion within a bearing surface 60 of the housing. The feedback device sends a signal to the DEC (not shown).

The windows 30 (see Figs. 2 and 4) utilized in the sleeve are specially shaped to allow a logarithmic flow. It is known for instance that:

$$Q = KA(\delta PS)^{.5}$$

where

$Q$ = engine fuel flow
$A$ = metering valve flow window area
$\delta P$ = metering valve pressure drop
$S$ = fuel specific gravity
$K$ = orifice flow constant.

It can be seen that a change in fuel flow $Q$ is dependent on a change in specific gravity $S$:

$$\frac{dQ}{Q} = \frac{dA}{A} - .5\frac{dS}{S}$$

Since it is desired that $Q$ remain constant with changes in $S$ then:

$$\frac{dA}{A} - .5\frac{dS}{S} = o \text{ or } \frac{da}{A} = .5\frac{dS}{S}$$

It is seen that a 1 percent change in S must create a 1/2 percent change in A.

Evaluating further, it is known that the shell and rod of the probe have different expansion rates as a function of temperature. The elements are so constructed, as is known in the art, so as to provide a small differential of expansion along an X-axis (dx) such that:

$$dx = kdt$$

where k is a constant

It is also known that the specific gravity of a fuel may be defined as:

$$S = aT + C$$

where a is a rate of change of specific gravity with temperature and C is a constant.

Similarly, a change in specific gravity is:

$$dS = adT.$$

Upon substituting for dT from above we find that:

$$dx = k\frac{dS}{a}.$$

Therefore, one may assume that changes in specific gravity resulting from changes in temperature produce a dx. A spool stroke (x) is defined a follows:

$$x = cln(Q)$$

where c is a constant and

$$dx = c\frac{dQ}{Q}.$$

Since,

$$\frac{dQ}{Q} = \frac{da}{A}$$

when S = a constant then:

$$k\frac{dS}{a} = c\frac{dQ}{Q} \text{ or}$$
$$k\frac{dS}{a} = c\frac{dA}{A}$$

Therefore, a percentage change in stroke (x) will create a corresponding percentage change in Q or A. Since a constant Q is required, changing A (window area) is desired. Now, if a dx of the proper magnitude is designed between the metering valve 16 and the feedback means 46 then, the metering valve will compensate for fuel density changes that result from changes in temperature with a fixed percentage change in flow independent of the magnitude of the flow. The probe 42 provides such a dx.

The logarithmic window has, by definition, the following x and y coordinates (see Fig. 4):

$$x = cln \text{ } Q$$

$$x = c(\ln Q - \ln Q \text{ min}) \text{ or}$$
$$x = cln(Q/Qmin)$$

which is the window length, and because

$$\delta P = (Qmin \text{ } \ln(Qmax/Qmin))/(b \text{ } ymin \text{ } xmax)$$

where b is a constant and $\delta P$ is known. Y is derived from $\delta P$ as follows:

$$Y = \left(\frac{Q}{Qmin}\right) Y \text{ min.}$$

Where Y is the window width.

In operation, fuel enters the metering spool 24 where is bathes the probe 12. The rod 44 and shell 42 respond quickly to temperature changes because of the large surface area and thinness of the shell, the access by the rod to the fuel via the shell perforations and the location of the probe within the flow stream. Such response causes the rod to reciprocate within the housing bearing 60 thereby repositioning the feedback means 46. The feedback means sends a signal to the DEC which sends a command to the EHV 40 which regulates flow in line 36 and 38 to null the spool 24. Because the windows 30 are shaped to allow a logarithmic flow, a percentage change in the specific gravity (density) of the fuel causes an area change between the windows 30 and apertures 28 of the metering valve to allow a corresponding percentage change in fuel flow to offset the change in specific gravity. The DEC never needs to know the actual temperature, it only needs to know that there is a temperature change. The temperature probe 12 in combination with the windows, which allow logarithmic flow, provide a simple, fast acting, light and reliable device.

The advantages of the invention art are as follows: The temperature probe is directly in the fuel flow path, and can response very quickly (within 2 or 4 seconds); The temperature probe is very stiff and therefore has no mechanical error associated therewith; and the actual temperature of the fuel does not need to be known.

## Claims

1. Apparatus for metering a constant weight flow of fluid while compensating for temperature changes of said fluid comprising:

   a valve for metering said constant weight flow, said valve having a metering window means (30) provided with a logarithmic shape and a spool (24) movable by actuation means along an axis for controlling the open cross-sectional flow area of said metering window means (30) to meter a constant weight flow therethrough;

a temperature probe (12) for sensing a change in temperature, said temperature probe (12) being disposed within the spool (24) in the fluid flow stream therethrough, and said temperature probe (12) changing a given percentage in length in the direction of said axis as the temperature of the fluid changes, and

means for sensing said length change and controlling said spool actuation means to move said spool along said axis such that as said temperature probe (12) changes a given percentage in length a corresponding percentage of the open cross sectional flow area of said metering window means (30) is changed so that a constant weight flow is maintained.

2. Apparatus according to claim 1, characterized in that the shape of said metering window means (30) is defined by x-y coordinates by:

x = cln (Q/Qmin) and

$$Y = \left( \frac{Q}{Qmin} \right) Ymin$$

where c is a constant,
Q is weight flow, and
Ymin is derived from the equation:

δP = (Qmin 1n (Qmax/Qmin))/(b ymin ymax)

where b is a constant and δP is known.

3. Apparatus according to claim 1 or 2, characterized in that the temperature probe (12) comprises a first element (42) having a first thermal coefficient of expansion and having one end fixed to the spool (24) and a second element (44) enclosed by portion of the first element (42) and having a second different thermal coefficient of thermal expansion, said second element (44) having one end portion (56) fixed to the other end of the first element (42), there being provided a feedback means (46) at the other end portion (58) of the second element (44) for sensing the length change of said temperature probe (12).

4. Apparatus according to claim 3, characterized in that said first element (42) is a thin, perforated shell, and said second element (44) is a rod disposed within the shell.

5. Apparatus according to claim 4, characterized in that said shell (42) increases in diameter in the direction of said fluid flow.

**Patentansprüche**

1. Vorrichtung zum Zumessen eines konstanten Massenstroms eines Fluids, während Temperaturänderungen des Fluids kompensiert werden, mit:

einem Ventil zum Zumessen des konstanten Massenstromes, wobei das Ventil eine Zumeßfenstereinrichtung (30), die mit einer logarithmischen Form versehen ist, und eine Trommel (24) hat, die durch eine Antriebseinheit entlang einer Achse zum Steuern des geöffneten Durchflußquerschnitts der Zumeßfenstereinrichtung (30) bewegbar ist, um einen durch diese hindurchgehenden konstanten Massenstrom zuzumessen;

einem Temperaturfühler (12) zum Erfassen einer Temperaturänderung, wobei der Temperaturfühler (12) innerhalb der Trommel (24) in dem durch diese hindurchgehenden Fluiddurchflußstrom angeordnet ist und wobei der Temperaturfühler (12) sich um einen bestimmten Prozentsatz in der Länge in der Richtung der Achse ändert, wenn sich die Temperatur des Fluids ändert, und

einer Einrichtung zum Erfassen der Längenänderung und zum Steuern der Trommelantriebseinheit, um die Trommel entlang der Achse zu bewegen, so daß, wenn der Temperaturfühler (12) sich um einen bestimmten Prozentsatz in der Länge ändert, ein entsprechender Prozentsatz des offenen Durchflußquerschnitts der Zumeßfenstereinrichtung (30) geändert wird, so daß ein konstanter Massenstrom aufrechterhalten wird.

2. Vorrichtung nach Anspruch 1, dadurch gekennzeichnet, daß die Form der Fenstereinrichtung durch x-y-Koordinaten definiert ist und durch:

x = cln(Q/Qmin) und

$$Y = \left( \frac{Q}{Qmin} \right) Ymin$$

wobei c eine Konstante ist,
Q der Massenstrom ist und
Ymin gewonnen wird aus der Gleichung:

δP = (Qmin 1n (Qmax/Qmin))/(b ymin ymax)

wobei b eine Konstante und $\delta P$ bekannt.

3. Vorrichtung nach Anspruch 1 oder 2, dadurch gekennzeichnet, daß der Temperaturfühler (12) ein erstes Element (42) aufweist, das einen ersten Wärmeausdehnungskoeffizienten hat und mit einem Ende an der Trommel (24) befestigt ist, und ein zweites Element (44), das von einem Teil des ersten Elements (42) umschlossen ist und einen zweiten, unterschiedlichen Wärmeausdehnungskoeffizienten hat, wobei das zweite Element (44) einen Teil (56) hat, der an dem anderen Ende des ersten Elements (42) befestigt ist, wobei dort eine Rückführeinrichtung (46) an dem anderen Endteil (58) des zweiten Elements (44) zum Erfassen der Längenänderung des Temperaturfühlers (12) vorgesehen ist.

4. Vorrichtung nach Anspruch 3, dadurch gekennzeichnet, daß das erste Element (42) ein dünner, perforierter Mantel ist und das zweite Element (44) ein Stab ist, der in dem Mantel angeordnet ist.

5. Vorrichtung nach Anspruch 4, dadurch gekennzeichnet, daß der Durchmesser des Mantels (42) in Richtung des Fluidstromes ansteigt.

**Revendications**

1. Appareil pour doser un débit pondéral constant d'un fluide tout en assurant une compensation des variations de la de ce fluide, comprenant une vanne de dosage du débit pondéral constant, cette vanne comportant un moyen à fenêtre de dosage (30) de forme logarithmique et un tiroir (24) pouvant être déplacé, par un moyen d'actionnement, le long d'un axe, afin de commander l'aire de passage ouverte de l'écoulement du moyen à fenêtre de dosage (30), afin de doser un débit pondéral constant à travers ce moyen, une sonde de température (12) pour détecter une variation de température, cette sonde de température (12) étant disposée tiroir (24), dans le courant d'écoulement du fluide à travers ce tiroir, cette sonde de température (12) changeant d'un pourcentage donné en longueur, dans la direction do l'axe, lorsque la température du fluide change, et un moyen pour détecter ce changement de longueur et pour commander le moyen d'actionnement du tiroir de manière à déplacer ce tiroir le long de l'axe de telle façon que, lorsque la sonde de température (12) change d'un pourcentage donné en longueur, l'aire de passage ouverte de l'ecoulement du moyen à fenêtre de dosage (30) change d'un pourcentage correspondant, si bien qu'un débit pondéral constant est maintenu.

2. Appareil suivant la revendication I caractérisé en ce que la forme du moyen à fenêtre de dosage (30) est définie, dans un système de coordonnées x-y, par:

$x = c\ln(Q/Q_{min})$ et

$$Y = \left(\frac{Q}{Q_{min}}\right) Y_{min}$$

où c est une constante,
Q est le débit pondéral et
$Y_{min}$ est dérivé à partir de l'équation:

$\delta P = (Q_{min} \ln(Q_{max}/Q_{min}))/(b\, y_{min}\, y_{max})$

où b est une constante et $\delta P$ est connu

3. Appareil suivant l'une quelconque des revendications 1 ou 2 caractérisé en ce que la sonde de température (12). comprend un premier élément (42) ayant un premier coefficient de dilatation thermique et une extrémité fixée au tiroir (24) et un second élément (44), enfermé par une portion du premier élément (42) et ayant un second coefficient de dilatation thermique différent, ce second élément (44) ayant une portion extrême (56) fixée à l'autre extrémité du premier élément (42), un moyen de réaction (46) étant prévu à l'autre portion extrême (58) du second élément (44), pour détecter la variation de longueur de la sonde de température (12).

4. Appareil suivant la revendication 3 caractérisé en ce que le premier élément (42) est une coquille perforée mince et le second élément (44) est une tige disposée à l'intérieur de la coquille.

5. Appareil suivant la revendication 4 caractérisé en ce que la coquille (42) augmente de diamètre dans la direction de l'écoulement du fluide.

FIG. 1

FIG. 2

FIG. 4

FIG. 3